Europäisches Patentamt

European Patent Office

Office européen des brevets

(11) Veröffentlichungsnummer: **0 481 188 A1**

# (12) EUROPÄISCHE PATENTANMELDUNG

(21) Anmeldenummer: **91113956.6**

(22) Anmeldetag: **21.08.91**

(51) Int. Cl.5: **B60R 21/32**

(30) Priorität: **16.10.90 DE 4032757**

(43) Veröffentlichungstag der Anmeldung:
**22.04.92 Patentblatt 92/17**

(84) Benannte Vertragsstaaten:
**ES FR GB IT SE**

(71) Anmelder: **MERCEDES BENZ AG**
**Mercedesstrasse 136**
**W-7000 Stuttgart 60(DE)**

(72) Erfinder: **Jahn, Walter**
**Sudetenweg 43**
**W-7031 Ehningen(DE)**
Erfinder: **Brambilla, Luigi, Dr.**
**Schurwaldstrasse 11**
**W-7030 Böblingen(DE)**

(54) **Kraftwagen mit einem Sicherheitsgurt und einem Airbag-System.**

(57) Die Anmeldung befaßt sich mit einem Kraftwagen mit einem einem Sitz zugeordneten Sicherheitsgurt und mit einem dem gleichen Sitz zugeordneten Airbag-System mit einer Druckgasquelle, die über einen Verzögerungssensor aktivierbar ist. Um den Schutz für den Sitzbenutzer im Falles eines Unfalles zu optimieren, schlägt die Erfindung vor, daß mindestens zwei voneinander unabhängig aktivierbare Druckgasquellen vorgesehen sind, und daß über den Verzögerungssensor bei angelegtem Sicherheitsgurt im Falle eines Unfalls nur eine Druckgasquelle aktivierbar ist, während bei nicht angelegtem Sicherheitsgurt alle Druckgasquellen aktivierbar sind, so daß nur in diesem Falle der maximale Airbag-Innendruck zur Verfügung steht.

EP 0 481 188 A1

Die Erfindung betrifft einen Kraftwagen mit einem einem Sitz zugeordneten Sicherheitsgurt und mit einem dem gleichen Sitz zugeordneten Airbag-System mit einer Druckgasquelle, die über einen Verzögerungssensor aktivierbar ist.

Eine solche an sich optimale Kombination von Sicherheitsgurt und Airbag weist jedoch noch den Nachteil auf, daß sich bei vollem Aufblasen des Airbags für einen angeschnallten Fahrzeuginsassen eine stärkere Rückhaltewirkung als eigentlich erforderlich und damit eine unnötig große Körperbelastung ergibt. Andererseits kann aber auch nicht einfach der Innendruck des Airbags reduziert werden, weil dann nicht mehr sichergestellt wäre, daß ein nicht angeschnallter Fahrzeuginsasse bei einem Unfall nicht auf harte Fahrzeugteile durchschlägt.

Der vorliegenden Erfindung lag die Aufgabe zugrunde, hier Abhilfe zu schaffen.

Diese Aufgabe wird erfindungsgemäß dadurch gelöst, daß mindestens zwei voneinander unabhängig aktivierbare Druckgasquellen vorgesehen sind, und daß über den Verzögerungssensor bei angelegtem Sicherheitsgurt im Falle eines Unfalls nur eine Druckgasquelle aktivierbar ist, während bei nicht angelegtem Sicherheitsgurt alle Druckgasquellen aktivierbar sind, so daß nur in diesem Falle der maximale Airbag-Innendruck zur Verfügung steht.

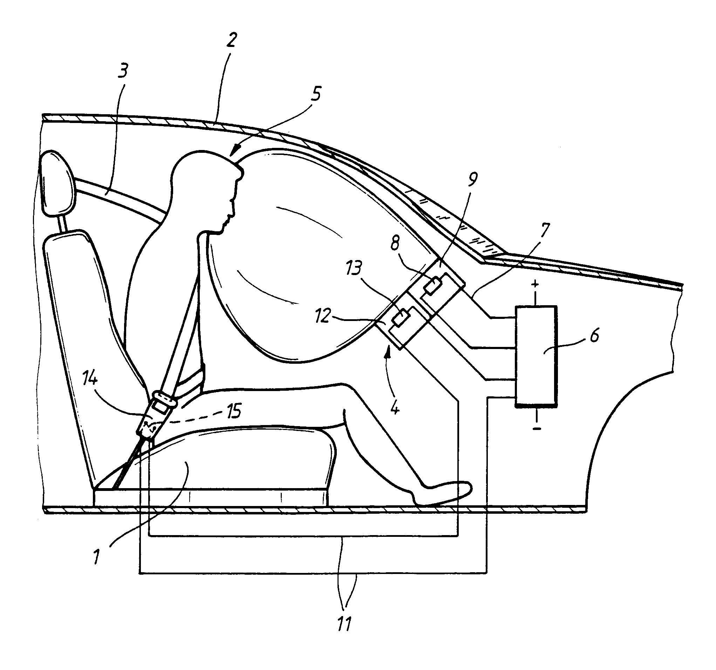

Der Gegenstand der Erfindung soll nachfolgend anhand eines in der Zeichnung schematisch dargestellten Ausführungsbeispiels näher erläutert werden.

Dem in der Zeichnung dargestellten Sitz 1 eines im übrigen nur angedeuteten Kraftwagens 2 ist sowohl ein Sicherheitsgurt 3 als auch ein Airbag-System 4 zugeordnet, um einen ausreichenden Schutz des Sitzbenutzers 5 bei einem Unfall sicherzustellen.

Die Airbag-Einheit 4 ist dabei so aufgebaut, daß im Falle eines Unfalls über einen verzögerungabhängig wirkenden Sensor 6 auf jeden Fall ein erster Stromkreis 7 geschlossen wird, der über eine Zündvorrichtung 8 eine erste Druckgasquelle 9 aktiviert, was zum Aufblasen eines Gaskissens 10 mit einem bestimmten Druck führt. Die Druckgasquelle kann dabei entweder von einem Gasgenerator oder aber auch durch einen gespeicherten Druckgasvorrat gebildet werden.

Außer dem ersten, vorstehend beschriebenen Stromkreis 7 sind nun noch ein zweiter Stromkreis 11, eine zweite Druckgasquelle 12 und eine zweite Zündvorrichtung 13 vorgesehen. Dieser zweite Stromkreis 11 kann jedoch nur dann geschlossen werden, wenn der Sitzbenutzer 5 den Sicherheitsgurt 3 nicht angelegt hat, weil dann ein im Gurtschloß 14 angeordneter Schalter 15 geschlossen ist (diese Stellung des Schalters 15 ist in der Zeichnung nicht dargestellt).

In der Zeichnung ist vielmehr die Situation bei angelegtem Sicherheitsgurt 3 gezeigt. In diesem Falle ist der Schalter 15 durch die in das Gurtschloß 14 eingeschobene, nicht gezeigte Schloßzunge geöffnet, so daß der Stromkreis 11 offen bleibt und die zweite Druckgasquelle 12 nicht aktiviert werden kann.

Es werden also nur dann beide Druckgasquellen aktiviert, wenn der Sitzbenutzer den Sicherheitsgurt nicht angelegt hat, und nur dann kann somit der maximale Innendruck des Gaskissens erreicht werden.

**Patentansprüche**

1. Kraftwagen mit einem einem Sitz zugeordneten Sicherheitsgurt und mit einem dem gleichen Sitz zugeordneten Airbag-System mit einer Druckgasquelle, die über einen Verzögerungssensor aktivierbar ist,
**dadurch gekennzeichnet,**
daß mindestens zwei voneinander unabhängig aktivierbare Druckgasquellen (9, 12) vorgesehen sind, und daß über den Verzögerungssensor (6) bei angelegtem Sicherheitsgurt (3) im Falle eines Unfalls nur eine Druckgasquelle (9) aktivierbar ist, während bei nicht angelegtem Sicherheitsgurt (3) alle Druckgasquellen (9, 12) aktivierbar sind, so daß nur in diesem Falle der maximale Airbag-Innendruck zur Verfügung steht.

**Europäisches Patentamt**

**EUROPÄISCHER RECHERCHENBERICHT**

Nummer der Anmeldung

**EP 91 11 3956**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 357 225   (MAZDA MOTOR CORPORATION) <br> * Spalte 8, Zeile 25 - Spalte 9, Zeile 17; Ansprüche 1,5,8-11,20,28; Abbildungen 2,5,9,10 * * <br> – – – | 1 | B 60 R 21/32 |
| A | US-D-520 341   (ABE ET AL.) <br> * das ganze Dokument * * <br> – – – | 1 | |
| P,A | DE-A-3 932 417   (AUDI AG) <br> * das ganze Dokument * * <br> – – – – – | 1 | |

| | | | RECHERCHIERTE SACHGEBIETE (Int. Cl.5) |
|---|---|---|---|
| | | | B 60 R |

**Der vorliegende Recherchenbericht wurde für alle Patentansprüche erstellt**

| Recherchenort | Abschlußdatum der Recherche | Prüfer |
|---|---|---|
| Den Haag | 07 Januar 92 | DUBOIS B.F.J. |